# EUROPÄISCHE PATENTSCHRIFT

(11) **EP 3 773 323 B1**
(45) Veröffentlichungstag und Bekanntmachung des Hinweises auf die Patenterteilung: **21.12.2022**
(21) Anmeldenummer: 20711052.9
(22) Anmeldetag: 27.02.2020
(51) Int. Cl.: A61C 8/00

(54) **ZAHNIMPLANTAT UND ZAHNPROTHESE**
DENTAL IMPLANT AND DENTAL PROSTHESIS
IMPLANT DENTAIRE ET PROTHÈSE DENTAIRE

(30) Priorität: 28.02.2019 DE 102019105182
(43) Veröffentlichungstag der Anmeldung: 17.02.2021
(73) Patentinhaber: TRI Dental Implants Int. AG, 6331 Hünenberg (CH)
(72) Erfinder: VENANZONI, Sandro, 8051 Zürich (CH); PEREZ, Rafael, 79106 Freiburg (DE); KAST, Holger, 6331 Hünenberg (CH); JUNG, Ronald, 8704 Herrliberg (CH)
(74) Vertreter: Witte, Weller & Partner Patentanwälte mbB
(86) Internationale Anmeldenummer: PCT/EP2020/055170
(87) Internationale Veröffentlichungsnummer: WO 2020/174055

(56) Entgegenhaltungen:
- WO-A1-2013/110714
- DE-A1-102009 057 754

## Beschreibung

Die vorliegende Erfindung betrifft ein Zahnimplantat zur Verwendung in einer Zahnprothese. Des Weiteren betrifft die vorliegende Erfindung eine Zahnprothese, welche das erfindungsgemäße Zahnimplantat, eine Suprakonstruktion und ein Befestigungsmittel zur Befestigung der Suprakonstruktion an dem Zahnimplantat aufweist. Ebenso betrifft die vorliegende Erfindung eine Suprakonstruktion als Gegenstück zu dem Zahnimplantat.

Der Begriff "Zahnimplantat" wird umgangssprachlich häufig uneinheitlich und oft fälschlicherweise für das Gesamtgebilde einer Zahnprothese verwendet. Daher sei an dieser Stelle klargestellt, dass unter einem "Zahnimplantat" im medizinischen und vorliegenden Sinne nur der Implantatkörper verstanden wird, also die künstliche Zahnwurzel, die im Kiefer des Patienten implantiert wird. Häufig wird anstelle des Begriffs "Zahnimplantat" daher auch der Begriff "Implantatkörper" verwendet. Im Weiteren wird jedoch einheitlich der Begriff "Zahnimplantat" für den genannten Teil der Zahnprothese verwendet.

Herkömmliche Zahnprothesen dieser Art weisen zusätzlich zu dem Zahnimplantat ein sogenanntes Abutment auf, welches als Verbindungsteil zwischen dem Zahnimplantat und der Implantatkrone (Suprakonstruktion) fungiert. Das Abutment bildet den sensiblen Übergang durch das periimplantäre Weichgewebe zur Mundhöhle und zur Suprakonstruktion. Derartige Abutments werden teilweise auch als "Stützpfeiler" oder als "Implantatpfosten" bezeichnet. Üblicherweise sind Abutments aus Titan, Keramik oder Keramikverbundstoffen wie Aluminiumoxid- oder Zirkondioxidkeramik.

Die Suprakonstruktion, also die künstliche Zahnkrone, ist typischerweise aus Keramik oder einem vergleichbaren Werkstoff. Traditionell wird die Suprakonstruktion von einem Zahntechniker wie folgt hergestellt: Zunächst wird ein Wachsmodell für die künstliche Zahnkrone erzeugt. Dann wird anhand des Wachsmodells die künstliche Zahnkrone gegossen. Das Abutment wird manuell auf die richtige Größe und Form abgeschliffen, um im letzten Schritt die gegossene, künstliche Zahnkrone auf das Abutment zu montieren. Meist erfolgt die Montage durch Verkleben der Suprakonstruktion mit dem Abutment. Durch diesen größtenteils manuell durchgeführten Prozess lassen sich hochpräzise Ergebnisse erzielen. Es versteht sich jedoch, dass das zeitaufwändig und damit auch kostenintensiv ist. Zudem ergibt sich eine Klebefuge zwischen der Suprakonstruktion und dem Abutment, welche anfällig für Undichtigkeiten ist und zudem die Langlebigkeit der Zahnprothese einschränken kann.

Heutzutage gibt es vielerlei Bestrebungen, den o.g. Prozess weitest möglich zu digitalisieren bzw. zu automatisieren. Die Suprakonstruktion wird mittlerweile häufig anhand eines 3D-Modells auf einer Fräsmaschine gefräst. Bei dieser Art der Herstellung wird direkt die Anschlussgeometrie für den Anschluss bzw. die Verbindung mit dem Abutment in die Suprakonstruktion auf deren Hinterseite eingebracht. Die Form und Größe des Abutments muss daher bereits bei der Herstellung der künstlichen Zahnkrone bekannt sein, um die Fräsmaschine entsprechend programmieren zu können. Dies wird meist anhand eines CAD-Modells des Abutments gemacht, welches in die Steuerung der Fräsmaschine eingelesen wird.

Da die Form und Größe des Abutments bereits vor der Herstellung der Suprakonstruktion bekannt sein muss, wählen viele Hersteller ein kurzes und kleines Abutment, das für jede Anatomie passt. Bei länglichen, also vergleichsweise langen Suprakonstruktionen ist ein kurzes und kleines Abutment im Verhältnis zu der Suprakonstruktion allerdings biomechanisch unpassend, so dass es zu Lockerungen oder Brüchen kommen kann.

Andere Hersteller lösen dies durch viele unterschiedliche Abutments. Je nach Form und Größe der Suprakonstruktion werden dann unterschiedlich große bzw. unterschiedlich geformte Abutments verwendet. So muss für einen künstlichen Schneidezahn beispielsweise ein anderes Abutment verwendet werden als für einen künstlichen Backenzahn. Ist bei der Verwendung für einen künstlichen Schneidezahn beispielsweise die hintere Flanke des Abutments nicht abgeschrägt, so wäre das Abutment auf der Hinterseite der Suprakonstruktion sichtbar, was schon aus rein ästhetischen Gesichtspunkten unerwünscht ist. Dieses Problem ergibt sich bei der Verwendung für einen künstlichen Backenzahn dagegen möglicherweise nicht.

Bei der automatisierten Herstellung mit digitalen CAD-Modellen werden für den Hersteller der Suprakonstruktion üblicherweise mehrere CAD-Datensätze bereitgestellt, welche die unterschiedliche Formen der Abutments abbilden. Gleichzeitig muss der Hersteller der Suprakonstruktion eine Vielzahl von Abutments unterschiedlicher Formen und Größen auf Lager halten. Dies gestaltet sich vielfach als umständlich und erzeugt darüber hinaus hohe Lagerkosten.

Die Nachteile der bisherigen Herangehensweisen lassen sich also wie folgt zusammenfassen: Zum einen schränkt die Verwendung von Abutments die Form- und Gestaltungsfreiheit der Suprakonstruktion inklusive deren transgingivalen Anteils ein. Ein nicht flexibler transgingivaler Anteil der Suprakonstruktion kann vor allem Probleme beim Weichgewebsmanagement hervorrufen. Ein ideales Weichgewebsmanagement ist allerdings entscheidend für ein ästhetisches Ergebnis und ein langfristig stabiles Knochenniveau. Zum anderen sind die Material- und Herstellungskosten für eine solche Zahnprothese gemäß dem Stand der Technik relativ hoch. Darüber hinaus ergibt sich eine in vielerlei Hinsicht nachteilhafte Klebefuge zwischen der Suprakonstruktion und dem Abutment.

In der deutschen Patentanmeldung mit der Anmeldenummer 10 2018 113 237.9 wird ein völlig neuer Ansatz beschrieben, bei dem eine Zahnprothese der o.g. Art auch ohne Abutment auskommt, wobei also die Suprakonstruktion direkt mit dem Zahnimplantat verbunden wird. Dies wird insbesondere durch eine speziell ausgestaltete Schnittstelle am Zahnimplantat ermöglicht, an der sich die Suprakonstruktion direkt befestigen lässt. Die Schnittstelle ermöglicht eine geometrisch eindeutig definierte Anordnung der Suprakonstruktion. Dies garantiert eine eindeutig definierte Relativposition zwischen Suprakonstruktion und Zahnimplantat.

Um eine unerwünschte Verdrehung bzw. Rotation der Suprakonstruktion gegenüber dem Zahnimplantat zu vermeiden, ist eine Verdrehsicherung notwendig. Diese Verdrehsicherung wird bei dem in der oben genannten Patentanmeldung beschriebenen Zahnimplantat durch eine nicht-drehsymmetrische Ausbildung der genannten Schnittstelle am Zahnimplantat und eine entsprechend als Gegenstück geformte Schnittstelle an der Suprakonstruktion erreicht. Bei einer aus der WO 2013/110714 A1 bekannten Zahnprothese wird die Verdrehsicherung über eine von der Form eines Kreises abweichende schräge Oberfläche, die ein Polygon, zum Beispiel einen Sechskant, aufweist, erreicht. Über diesen Sechskant stehen die Suprakonstruktion und das Zahnimplantat miteinander in einem lösbaren Eingriff, wodurch ein Verdrehen verhindert wird.

Ein weiteres Zahnimplantat, welches die Grundlage für den Oberbegriff der Ansprüche 1 und 10 bildet, ist aus der DE 10 2009 057 754 A1 bekannt. Dieses Zahnimplantat umfasst eine Implantatschraube mit einem Außengewinde und einer konischen Anlagefläche, einen Implantataufbau mit einer zur konischen Anlagefläche der Implantatschraube komplementären konischen Anlagefläche, eine Spannschraube, die in die Implantatschraube einschraubbar ist und durch die der Implantataufbau mit der Implantatschraube verbindbar ist, und eine Positionierbuchse, die in der Implantatschraube verdrehsicher lagerbar ist und mit der der Implantataufbau verdrehsicher verbindbar ist.

Wenngleich sich das in der oben genannten Patentanmeldung beschriebene Zahnimplantat als überaus vorteilhaft herausgestellt hat, haben sich die Erfinder der vorliegenden Erfindung zum Ziel gesetzt, die Verdrehsicherung des Zahnimplantats noch weiter zu verbessern.

Es ist daher eine Aufgabe der vorliegenden Erfindung, ein Zahnimplantat bereitzustellen, welches ohne die Verwendung eines Abutments eine direkte Verbindung mit der Suprakonstruktion ermöglicht und bei dem die Verdrehsicherung zur Verhinderung einer Verdrehung bzw. Rotation der Suprakonstruktion gegenüber dem Zahnimplantat weiter verbessert ist. Es ist dabei insbesondere eine Aufgabe, die Kosten zur Herstellung der Verdrehsicherung und damit auch die gesamten Herstellkosten des Zahnimplantats zu senken.

Diese Aufgabe wird erfindungsgemäß durch ein Zahnimplantat gemäß Anspruch 1 gelöst, das einen Implantatkörper aufweist, der auf einer Außenseite ein Außengewinde zur Befestigung des Zahnimplantats an einem Kieferknochen aufweist und eine sich entlang einer Längs Längsachse des Zahnimplantats erstreckende Öffnung hat, in der ein Innengewinde zur Befestigung einer Suprakonstruktion an dem Zahnimplantat angeordnet ist. Der Implantatkörper weist ferner eine Schnittstelle zur Befestigung der Suprakonstruktion an dem Zahnimplantat auf, die an einem stirnseitigen Ende des Implantatkörpers angeordnet ist. Die Schnittstelle weist eine Ausnehmung auf, in der ein Verdrehsicherungselement angeordnet ist, das dazu eingerichtet ist, eine Verdrehung der Suprakonstruktion um die Längsachse relativ zu dem Zahnimplantat zu verhindern. Das Verdrehsicherungselement ist als ein von dem Implantatkörper separates Bauteil ausgestaltet, das im Bereich der Schnittstelle an dem Implantatkörper befestigt ist. Die Schnittstelle weist eine sich über einen Winkelbereich von mindestens 90° um die Längsachse herum erstreckende konvexe, abgerundete Wölbung auf, die durch die Ausnehmung zumindest teilweise unterbrochen ist.

Das erfindungsgemäße Zahnimplantat ist also zumindest zweiteilig aufgebaut. Einerseits weist es den Implantatkörper auf, an dem das Außengewinde angeordnet ist, in dem die Öffnung mit dem Innengewinde ausgebildet ist und an dessen stirnseitigen Ende die Schnittstelle angeordnet ist. Separat zu diesem Implantatkörper weist das Zahnimplantat das genannte Verdrehsicherungselement auf, das als separates, zweites Bauteil ausgestaltet ist und im Bereich der Schnittstelle an dem Implantatkörper befestigt ist. Die Verdrehsicherung ist demnach nicht als integraler Bestandteil des Implantatkörpers in ein und demselben Bauteil ausgebildet, sondern wird als separates Bauteil produziert, das nachträglich an dem Implantatkörper befestigt wird.

Der Implantatkörper und das Verdrehsicherungselement lassen sich somit separat voneinander produzieren. Dies hat den Vorteil, dass insbesondere die Herstellung des Implantatkörpers dadurch deutlich vereinfacht wird. Da die Verdrehsicherung nicht bereits bei der Herstellung des Implantatkörpers in die Schnittstelle eingearbeitet werden muss, lässt sich die Schnittstelle vergleichsweise einfach produzieren. Große Teile der Schnittstelle lassen sich drehsymmetrisch ausgestalten, so dass diese mit Hilfe einer herkömmlichen Drehmaschine produzierbar sind. Auch das separat hergestellte Verdrehsicherungselement lässt sich vergleichsweise einfach und damit relativ kostengünstig produzieren. Die Produktionskosten des Zahnimplantats lassen sich im Vergleich zu einer einteiligen Ausbildung von Implantatkörper mit Verdrehsicherung somit senken.

Durch die separate Ausbildung des Verdrehsicherungselements lässt sich darüber hinaus die Verdrehsicherungsfunktion auch aus mechanischen Gesichtspunkten verbessern. Das Verdrehsicherungselement lässt sich nämlich vergleichsweise größer und stabiler herstellen als die geometrischen Merkmale, die bei einer einteiligen Ausgestaltung von Implantatkörper und Verdrehsicherung, zur Gewährleistung der Verdrehsicherungsfunktion in die Schnittstelle des Implantatkörpers direkt eingearbeitet sind. Die durch das separat ausgestaltete Bauteil gewährleistete Verdrehsicherung hält somit vergleichsweise höheren Kräften und Momenten stand.

In einer Ausgestaltung ist das Verdrehsicherungselement form- oder stoffschlüssig mit dem Implantatkörper verbunden.

Gemäß einer weiteren Ausgestaltung ist das Verdrehsicherungselement in den Implantatkörper eingepresst oder in den Implantatkörper eingeklemmt.

Diese spezielle Art der stoffschlüssigen Verbindung zwischen Verdrehsicherungselement und Implantatkörper ist besonders bevorzugt, da sie sich einfach und kostengünstig realisieren lässt. Da sowohl der Implantatkörper als auch das Verdrehsicherungselement vorzugsweise aus Titan sind, ist ein Einpressen oder Einklemmen des Verdrehsicherungselements in den Implantatkörper auch aus mechanischer Sicht von Vorteil.

Erfindungsgemäß weist die am Implantatkörper vorgesehene Schnittstelle eine Ausnehmung auf, in der das Verdrehsicherungselement angeordnet ist.

Diese Ausnehmung lässt sich relativ einfach herstellen. Das Verdrehsicherungselement ist vorzugsweise passgenau in der Ausnehmung aufgenommen. Vorzugsweise liegt das Verdrehsicherungselement mit zumindest einer Fläche an zumindest einer entsprechend geformten Gegenfläche der Ausnehmung an, um ein Verdrehen des Verdrehsicherungselements relativ zu dem Implantatkörper zu verhindern.

Gemäß einer weiteren Ausgestaltung ist die an dem Implantatkörper angeordnete Schnittstelle abgesehen von der Ausnehmung drehsymmetrisch.

Alle übrigen Teile der Schnittstelle (außer der Ausnehmung) lassen sich daher relativ einfach, bspw. mit Hilfe einer Drehmaschine, herstellen. Unter einem drehsymmetrischen Körper wird vorliegend ein Körper verstanden, der sich nach einer Drehung in einer Ebene um einen Winkel kleiner 360° wieder deckungsgleich auf sich selbst abbildet.

Vorzugsweise ist die Schnittstelle darüber hinaus spiegelsymmetrisch zu einer Längsschnittebene, in der die Längsachse des Zahnimplantats liegt und die das Verdrehsicherungselement in zwei gleich große Hälften teilt.

Das aus Implantatkörper und Verdrehsicherungselement bestehende Zahnimplantat ist also nicht rotationssymmetrisch, aber spiegelsymmetrisch zu der genannten Längsschnittebene. Vorzugsweise ist das Zahnimplantat lediglich zu der oben genannten Längsschnittebene, jedoch zu keiner weiteren Ebene spiegelsymmetrisch. Dies hat den Vorteil, dass die Position der Suprakonstruktion relativ zu dem Implantatkörper eindeutig definiert ist. Die Suprakonstruktion lässt sich also nur in einer einzigen, definierten Position an dem Implantatkörper anordnen.

Erfindungsgemäß weist die Schnittstelle eine sich über einen Winkelbereich von mindestens 90° um die Längsachse des Zahnimplantats herum erstreckende konvexe, abgerundete Wölbung auf, die durch die Ausnehmung zumindest teilweise unterbrochen ist.

Die Ausnehmung ist in dieser Ausgestaltung also in die konvexe, abgerundete Wölbung eingebracht. Die konvexe, abgerundete Wölbung dient der Befestigung der Suprakonstruktion an dem Zahnimplantat. Sie nimmt Kräfte in Radialrichtung, also orthogonal zu der Längsachse des Zahnimplantats, auf. Zudem dient die Wölbung als Zentrierung.

Unter einer "konvexen" Wölbung wird vorliegend jede nach außen gewölbte Wölbung verstanden. Eine konvexe Wölbung bildet das Gegenteil zu einer konkaven, nach innen gewölbten Mulde. Lediglich zur Klarstellung wird die konvexe Wölbung vorliegend zusätzlich auch als abgerundet definiert, wenngleich der Begriff "konvex" eine solche Rundung bzw. Abrundung bereits impliziert. Die vorliegend als konvex und abgerundet definierte Wölbung weist vorzugsweise eine stetige Tangentensteigung (ohne "Knick") auf.

Gemäß einer weiteren Ausgestaltung steht das Verdrehsicherungselement radial nach innen über die Wölbung hinaus ab.

Das Verdrehsicherungselement ragt also aus der Ausnehmung, die in die Wölbung eingebracht ist, in Richtung zu der Längsachse des Implantatkörpers hervor. Das Verdrehsicherungselement ist daher vorzugsweise größer ausgestaltet als die Ausnehmung, die in die konvexe Wölbung eingebracht ist.

Gemäß einer weiteren Ausgestaltung weist das Verdrehsicherungselement einen Zapfen, der in eine im Implantatkörper angeordnete Bohrung eingesteckt ist, und ein Kopfteil, das außerhalb der Bohrung angeordnet ist, auf.

Die Bohrung ist vorzugsweise als Sacklochbohrung ausgestaltet, welche an ihrem oberen Ende in die Ausnehmung mündet. Das Kopfteil bildet den sichtbaren Teil des Verdrehsicherungselements, wohingegen der Zapfen in die Bohrung eingeführt ist und damit nicht sichtbar ist.

Das Kopfteil ist vorzugsweise der Teil des Verdrehsicherungselements, der radial nach innen über die Wölbung hinaus absteht. Das Kopfteil hat daher vorzugsweise einen größeren Durchmesser als der Zapfen.

Gemäß einer weiteren Ausgestaltung ist der Zapfen des Verdrehsicherungselements formschlüssig mit der Bohrung verbunden und/oder das Kopfteil des Verdrehsicherungselements formschlüssig in der Ausnehmung angeordnet. Hierdurch wird eine Verdrehung des Verdrehsicherungselements relativ zu dem Implantatkörper verhindert.

Der Formschluss zwischen Zapfen des Verdrehsicherungselements und der im Implantatkörper befindlichen Bohrung kann bspw. dadurch realisiert sein, dass der Zapfen einen Außendurchmesser aufweist, der größer als ein Innendurchmesser der Bohrung ist. Der Zapfen wird also mit einem leichten Übermaß versehen, so dass die Verbindung zwischen Zapfen und Bohrung als Presspassung ausgestaltet ist.

Gemäß einer weiteren Ausgestaltung hat das Kopfteil des Verdrehsicherungselements an seiner Oberseite eine konvexe Oberfläche.

Die konvexe Oberfläche ist vorzugsweise als zylindrische Oberfläche ausgestaltet. Hiermit ist jedoch nicht gemeint, dass die konvexe Oberfläche einen vollständigen Zylinder bildet, sondern dass die konvexe Oberfläche einen Sektor bzw. Ausschnitt einer zylindrischen Mantelfläche ist. Die konvexe Oberfläche des Kopfteils des Verdrehsicherungselements liegt in montiertem Zustand der Zahnprothese an einer entsprechend konkav geformten Fläche an der Suprakonstruktion an, die das Gegenstück zu dem Verdrehsicherungselement bildet.

Gemäß einer weiteren Ausgestaltung ist die Bohrung, in der der Zapfen des Verdrehsicherungselements angeordnet ist, parallel versetzt zu der Längsachse des Zahnimplantats. Das Verdrehsicherungselement ist also außermittig am Implantatkörper angeordnet.

Gemäß einer weiteren Ausgestaltung weist die Schnittstelle eine im Vergleich zu der konvexen Wölbung radial weiter außen angeordnete Auflagefläche auf, wobei die Auflagefläche zumindest einen kreisringförmigen Abschnitt hat, der quer zu der Längsachse ausgerichtet ist.

Der kreisringförmige Abschnitt der Auflagefläche umgibt die konvexe Wölbung, er ist also radial weiter außen angeordnet als diese. Unter "quer" wird vorliegend jede Art der Ausrichtung verstanden, welche nicht parallel ist. In "quer" kann, muss jedoch nicht zwangsläufig orthogonal sein. Vorzugsweise hat die kreisringförmige Auflagefläche rundherum einen konstanten Winkel in Bezug auf die Längsachse des Zahnimplantats. Vorzugsweist ist dieser Winkel größer 60°, besonders bevorzugt ist dieser Winkel ein rechter Winkel (90°).

Der kreisringförmige Abschnitt der Auflagefläche dient der Aufnahme von Axialkräften parallel zur Längsachse. Hierdurch werden Zugspannungen vermieden, welche zum Bruch der Suprakonstruktion führen könnten. Des Weiteren dient der kreisringförmige Abschnitt der Auflagefläche als Grenz- bzw. Dichtfläche, um entlang des Umfangs Zwischenräume zwischen der Suprakonstruktion und dem Zahnimplantat zu vermeiden, die durch Verunreinigungen eintreten könnten. Der kreisringförmige Abschnitt der Auflagefläche bildet daher vorzugsweise den radial äußersten Bereich der Schnittstelle, welche alle übrigen Bereiche der Schnittstelle inklusive der Wölbung umgibt. Die Auflagefläche ist vorzugsweise auch im Vergleich zu dem Verdrehsicherungselement radial weiter außen angeordnet.

Die Auflagefläche bildet vorzugsweise eine an der Oberseite des Implantatkörpers angeordnete Stirnfläche, über die das Verdrehsicherungselement nicht absteht. Das Verdrehsicherungselement ist also unterhalb der Auflagefläche angeordnet.

Gemäß einer weiteren Ausgestaltung grenzt die konvex abgerundete Wölbung an den kreisringförmigen Abschnitt der Auflagefläche unmittelbar an. Vorzugsweise geht die konvexe Wölbung stetig und tangential in den radial weiter außen angeordneten kreisringförmigen Abschnitt der Auflagefläche über.

Gemäß einer weiteren Ausgestaltung erstreckt sich die Wölbung über einen Winkelbereich von mindestens 270° um die Längsachse herum.

Gemäß einer weiteren Ausgestaltung liegt zumindest ein Teil eines radial äußeren Randes der Wölbung und zumindest ein Teil eines radial inneren Randes der Wölbung jeweils auf einer Kreislinie.

Gemäß einer weiteren Ausgestaltung ist die Wölbung in einem Längsschnitt des Zahnimplantats betrachtet ein Kreissektor. Vorzugsweise beträgt der Mittelpunktwinkel des Kreissektors 90°. Die konvex abgerundete Wölbung ist im Längsschnitt also vorzugsweise ein Viertelkreis.

Die vorliegende Erfindung betrifft des weiteren eine Suprakonstruktion, mit einer sich entlang einer Längsachse der Suprakonstruktion erstreckenden Öffnung und einer an einem stirnseitigen Ende der Suprakonstruktion angeordneten Schnittstelle zur Befestigung der Suprakonstruktion an einem Zahnimplantat, wobei die Schnittstelle eine sich über einen Winkelbereich von mindestens 90° um die Längsachse herum erstreckende konkave Wölbung aufweist, die durch eine tunnelartige Aussparung unterbrochen ist, die in radialer Richtung orthogonal zu der Längsachse verläuft und als Gegenstück zu einem Verdrehsicherungselement des Zahnimplantats fungiert.

Die Aussparung, welche in die konkave Wölbung eingebracht ist, dient als Gegenstück zu dem Verdrehsicherungselement des Zahnimplantats.

Gemäß einer weiteren Ausgestaltung weist die Schnittstelle eine im Vergleich zu der konkaven Wölbung radial weiter außen angeordnete Auflagefläche auf, wobei die Auflagefläche zumindest einen kreisringförmigen Abschnitt hat, der quer zu der Längsachse ausgerichtet ist.

Gemäß einer weiteren Ausgestaltung geht ein radial äußerer Rand der konkaven Wölbung tangential in den kreisringförmigen Abschnitt der Auflagefläche über.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in den Zeichnungen dargestellt und wird in der nachfolgenden Beschreibung näher erläutert. Es zeigen:
- Fig. 1: eine perspektivische Ansicht eines Ausführungsbeispiels des erfindungsgemäßen Zahnimplantats;
- Fig. 2: eine perspektivische Ansicht eines Implantatkörpers des in Fig. 1 gezeigten Zahnimplantats;
- Fig. 3: eine perspektivische Ansicht eines Verdrehsicherungselements des in Fig. 1 gezeigten Zahnimplantats;
- Fig. 4: eine Längsschnittansicht des in Fig. 1 gezeigten Zahnimplantats;
- Fig. 5: eine Draufsicht von oben auf das in Fig. 1 gezeigte Zahnimplantat;
- Fig. 6: eine Draufsicht von oben auf den in Fig. 2 gezeigten Implantatkörper;
- Fig. 7: eine perspektivische Ansicht einer zudem in Fig. 1 gezeigten Zahnimplantat passenden Suprakonstruktion;
- Fig. 8: eine Draufsicht von unten auf die in Fig. 7 gezeigte Suprakonstruktion; und
- Fig. 9: eine Längsschnittansicht einer Zahnprothese, die das in Fig. 1 gezeigte Zahnimplantat und die in Fig. 7 gezeigte Suprakonstruktion aufweist.

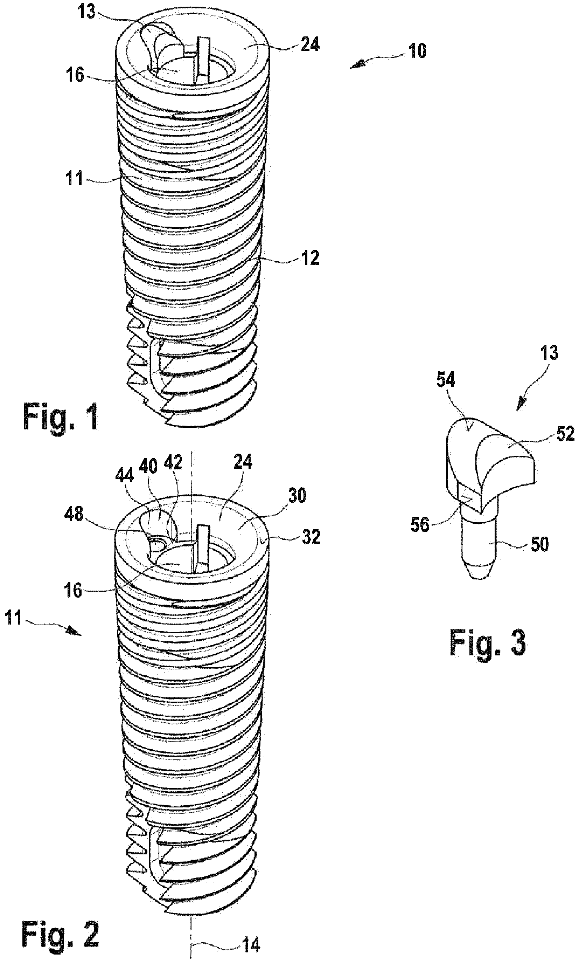

Fig. 1, 4 und 5 zeigen ein Ausführungsbeispiel des erfindungsgemäßen Zahnimplantats in verschiedenen Ansichten. Das Zahnimplantat ist darin in seiner Gesamtheit mit der Bezugsziffer 10 bezeichnet.

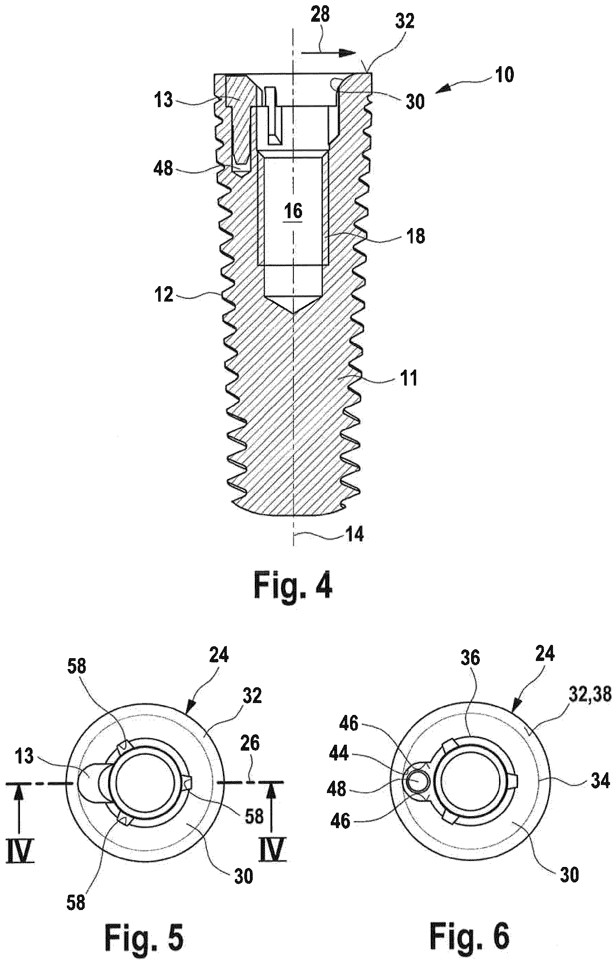

Das Zahnimplantat 10 ist zweiteilig aufgebaut. Es weist zwei separate Bauteile auf, einen Implantatkörper 11 und ein daran befestigtes Verdrehsicherungselement 13. Der Implantatkörper 11 ist separat (ohne das Verdrehsicherungselement 13) in Fig. 2 und 6 gezeigt. Das Verdrehsicherungselement 13 ist separat in Fig. 3 gezeigt.

Vorzugsweise ist sowohl der Implantatkörper 11 als auch das Verdrehsicherungselement 13 aus Titan oder Zirkonoxid gefertigt. Das Verdrehsicherungselement 13 ist vorzugsweise lösbar an dem Implantatkörper 11 befestigt. Die Verbindung zwischen dem Verdrehsicherungselement 13 und dem Implantatkörper 11 kann als form- und/oder stoffschlüssige Verbindung ausgestaltet sein. Besonders bevorzugt ist das Verdrehsicherungselement 13 in den Implantatkörper 11 eingepresst oder eingeklemmt.

Die Merkmale des Implantatkörpers 11 und des Verdrehsicherungselements 13 werden nachfolgend zunächst einzeln erläutert, bevor anschließend auf die Art der Anordnung des Verdrehsicherungselements 13 an dem Implantatkörper 11 sowie auf die Art der Verbindung der beiden Bauteile näher eingegangen wird.

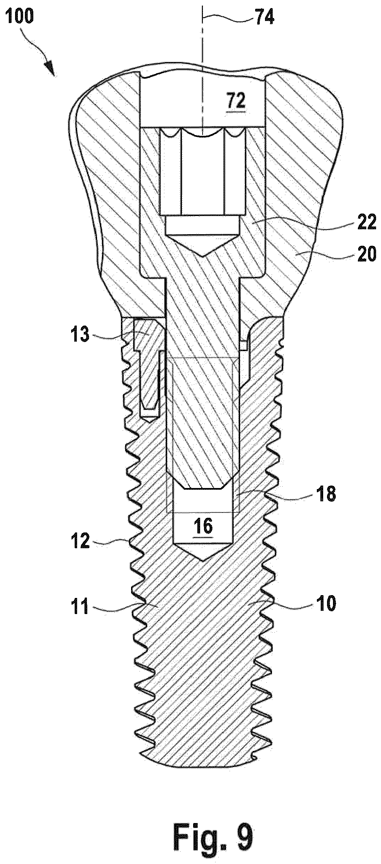

Der Implantatkörper 11 weist auf seiner Außenseite ein Außengewinde 12 auf, mit Hilfe dessen das Zahnimplantat 10 in einen Kieferknochen eines Patienten eingeschraubt werden kann. Der Implantatkörper 11 erstreckt sich im Wesentlichen entlang einer Längsachse 14, die auch als Mittelachse bezeichnet werden kann. In seinem Inneren weis der Implantatkörper 11 eine Öffnung 16 auf, die sich entlang der Längsachse 14 erstreckt. Vorzugsweist ist zumindest ein Teil dieser Öffnung 16 als Bohrung, besonders bevorzugt als Sacklochbohrung ausgestaltet (siehe Fig. 4). In der Öffnung 16 ist ein Innengewinde 18 angeordnet. Dieses Innengewinde 18 dient der Befestigung einer Suprakonstruktion 20 (künstliche Zahnkrone) an dem Zahnimplantat 10. Zur Befestigung der Suprakonstruktion 20 an dem Zahnimplantat 10 wird vorzugsweise eine Schraube 22 verwendet, welche in das Innengewinde 18 eingreift (siehe Fig. 9).

An dem stirnseitigen oberen Ende weist der Implantatkörper 11 eine Schnittstelle 24 auf. Diese Schnittstelle 24 dient der Befestigung der Suprakonstruktion 20 an dem Zahnimplantat 10. Die Schnittstelle 24 bildet sozusagen die Kontaktfläche, mit der das Zahnimplantat 10 die Suprakonstruktion 20 in montiertem Zustand kontaktiert.

Die Schnittstelle 24 ist im Detail in einer Draufsicht in Fig. 5 (mit Verdrehsicherungselement 13) und Fig. 6 (ohne Verdrehsicherungselement) gezeigt. Aufgrund ihrer Form und Konstruktion ermöglicht die Schnittstelle 24 eine direkte Anbringung der Suprakonstruktion 20 an dem Zahnimplantat 10 (ohne die Verwendung eines dazwischen angeordneten Abutments). Diese Längsschnittebene 26 wird durch die Längsachse 14 und die dazu orthogonal verlaufende Radialrichtung 28 aufgespannt. Die Längsschnittebene 26 teilt das Verdrehsicherungselement 13 in zwei gleich große Hälften.

Die Schnittstelle 24 ist abgesehen von dem Verdrehsicherungselement 13 und dessen Aufnahme, welche als Aussparung in der Schnittstelle 24 realisiert ist, 120°drehsymmetrisch um die Längsachse 14.

Die Schnittstelle 24 weist eine konvexe Wölbung 30 sowie eine die konvexe Wölbung 30 umgebende Auflagefläche 32 auf. Die konvexe Wölbung 30 dient im Wesentlichen der Aufnahme von Kräfte in Radialrichtung 28. Die Auflagefläche 32 dient dagegen als axiale Auflage, welche im Wesentlichen Kräfte in Längsrichtung, also entlang der Längsachse 14, aufnimmt. Die Suprakonstruktion 20 stützt sich in montiertem Zustand sowohl an der konvexen Wölbung 30 als auch an der Auflagefläche 32 ab.

Die konvexe Wölbung 30 ist abgerundet, also nicht eckig. Die konvexe Wölbung 30 erstreckt sich über einen Winkelbereich von mindestens 90° um die Längsachse 14 herum. In dem dargestellten Ausführungsbeispiel erstreckt sich die Wölbung 30 über einen Winkelbereich von annähernd 360°, also fast rundherum. Die konvexe Wölbung 30 wird lediglich durch eine Ausnehmung 40 unterbrochen, die als Aufnahme für das Verdrehsicherungselement 13 dient.

Im Querschnitt betrachtet (siehe Fig. 4) ist die Wölbung 30 vorzugsweise als Kreissektor mit einem Mittelpunktswinkel von 90° ausgestaltet. Sie bildet im Querschnitt also einen Viertelkreis. Es versteht sich jedoch, dass die konvexe Wölbung 30 im Querschnitt nicht zwangsläufig kreisrund sein muss. Sie kann auch elliptisch geformt oder als Freiformfläche ausgestaltet sein.

Der äußere Rand 34 und der innere Rand 36 der Wölbung 30 liegen vorzugsweise auf einer Kreislinie. In der in Fig. 6 gezeigten Draufsicht ist die Wölbung 30 zumindest abschnittsweist kreisringförmig. Die Wölbung 30 bildet demnach einen Teil der Oberfläche eines Torus.

Vorzugsweise grenzt die konvexe Wölbung 30 unmittelbar an die Öffnung 16 an. Der äußere Rand 34 der konvexen Wölbung 30 grenzt vorzugsweise unmittelbar an einen kreisringförmigen Abschnitt 38 der Auflagefläche 32 an. Dieser kreisringförmige Abschnitt 38 verläuft quer, vorzugsweise unter einem Winkel > 60°, besonders bevorzugt (wie auch in Fig. 4 dargestellt) orthogonal zu der Längsachse 14 des Zahnimplantats 10. Dieser kreisringförmige Abschnitt 38 der Auflagefläche 32 bildet vorzugsweise die obere Stirnfläche des Implantatkörpers 11. Der kreisringförmige Abschnitt 38 der Auflagefläche 32 geht vorzugsweise tangential in die konvexe Wölbung 30 über.

Das Verdrehsicherungselement 13 ist, wie bereits erwähnt, in einer in der Schnittstelle 24 vorgesehenen Ausnehmung 40 angeordnet. Die Ausnehmung 40 ist als taschenförmige Ausnehmung in die konvexe Wölbung 30 eingebracht. Das Verdrehsicherungselement 13 ist vorzugsweise passgenau in der Ausnehmung 40 angeordnet. Die Ausnehmung 40 weist eine axiale Auflagefläche 42 und eine die axiale Auflagefläche 42 zumindest teilweise umgebende Seitenwand 44 auf. Die axiale Auflagefläche 42 ist vorzugsweise orthogonal zu der Längsachse 14 des Implantatkörpers 11 ausgerichtet. Die Seitenwand 44 verläuft quer, vorzugsweise orthogonal zu der axialen Auflagefläche 42. Die Seitenwand 44 ist vorzugsweise konkav geformt. An ihren beiden seitlichen Enden weist die Seitenwand 44 zwei einander gegenüberliegende planare Anlageflächen 46 auf (siehe Fig. 6).

Des Weiteren ist im Implantatkörper 11 eine Bohrung 48 vorgesehen, in die das Verdrehsicherungselement 13 einführbar ist. Die Bohrung 48 ist parallel versetzt zu der Längsachse 14 angeordnet. Sie mündet in die Ausnehmung 40. Das Verdrehsicherungselement 13 ist sowohl in der Bohrung 48 als auch in der Ausnehmung 40 vorzugsweise formschlüssig angeordnet, um zu verhindern, dass das Verdrehsicherungselement 13 sich um seine Längsachse relativ zu dem Implantatkörper 11 verschwenkt oder gar rotiert.

Das Verdrehsicherungselement 13 ist im Detail in Fig. 3 dargestellt. Es weist einen Zapfen 50 und einen an der Oberseite des Zapfens 50 angeordnetes Kopfteil 52 auf. Der Zapfen 50 ist in montiertem Zustand des Verdrehsicherungselements 13 in der Bohrung 48 angeordnet. Das Kopfteil 52 ist hingegen außerhalb der Bohrung 48 in der Ausnehmung 40 angeordnet. Das Kopfteil 52 weist daher einen größeren Durchmesser auf als der Zapfen 50. Das Kopfteil 52 und der Zapfen 50 sind vorzugsweise integral miteinander verbunden.

An seiner Oberseite weist das Kopfteil 52 des Verdrehsicherungselements 13 eine konvexe Oberfläche 54 auf. Diese konvexe Oberfläche 54 ist vorzugsweise zylindrisch ausgestaltet. Sie kann jedoch auch anders gekrümmt sein. Die konvexe Oberfläche 54 liegt in montiertem Zustand der Zahnprothese vorzugsweise an der Suprakonstruktion 20 an.

Seitlich weist das Kopfteil 52 des Verdrehsicherungselements 13 zwei planare, einander gegenüberliegende Anlageflächen 56 auf, wobei in Fig. 3 nur eine dieser beiden Anlageflächen 56 sichtbar ist. Diese beiden Anlageflächen 56 liegen in montiertem Zustand an den planaren Anlageflächen 46 der Ausnehmung 40 an. Die Anlageflächen 46 wie auch die Anlageflächen 56 verlaufen vorzugsweise parallel zueinander.

Wie insbesondere aus Fig. 4 und 5 ersichtlich ist, steht das Verdrehsicherungselement 13 radial nach innen über die konvexe Wölbung 30 hinaus ab. Auch ein Teil der planaren Anlageflächen 56 des Kopfteils 52 des Verdrehsicherungselements 13 steht über die Seitenwand 44 bzw. über die planaren Anlageflächen 46 nach innen hin ab. Die planaren Anlageflächen 56 des Kopfteils 52 liegen daher nicht nur an der Seitenwand 44 bzw. den Anlageflächen 46 an dem Implantatkörper 11 an, sondern auch an entsprechend geformten Gegenflächen an der Suprakonstruktion 20.

In Fig. 5 und 6 sind ferner insgesamt drei längliche Ausnehmungen 58 gezeigt, die angrenzend an die Öffnung 16 angeordnet sind und in die Innenwand des Implantatkörpers 11 eingebracht sind. Diese Ausnehmungen 58 dienen als Werkzeugeingriff für ein Werkzeug, mit dem sich das Zahnimplantat 10 in den Kieferknochen eines Patienten einschrauben lässt.

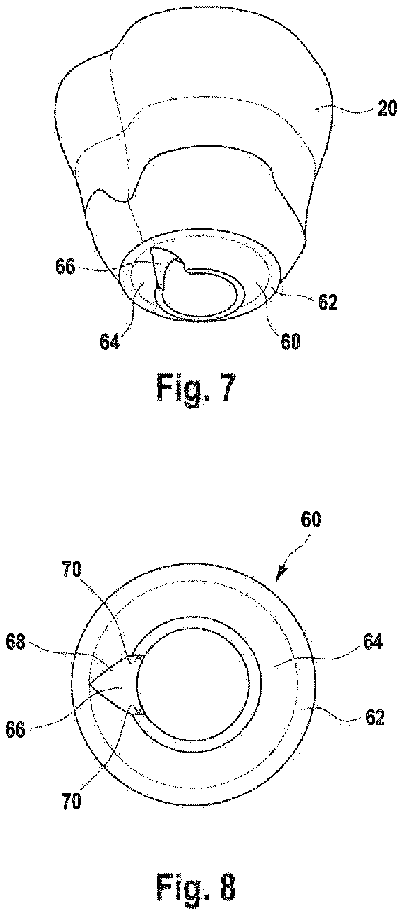

Fig. 7 und 8 zeigt eine beispielhafte Suprakonstruktion 20. Im Inneren der Suprakonstruktion 20 befindet sich eine Öffnung 72, die in dem hier gezeigten Zustand als Durchgangsbohrung ausgestaltet ist. Die Öffnung 72 verläuft entlang einer Längsachse 74. Das obere Ende dieser Durchgangsbohrung wird nach der Montage der Zahnprothese 100 am Patienten verschlossen. An der Unterseite der Suprakonstruktion 20 ist eine Schnittstelle 60 angeordnet, die als Gegenstück zu der an dem Zahnimplantat 10 angeordneten Schnittstelle 24 dient. Die Schnittstelle 60 ist im Detail in einer Draufsicht in Fig. 8 gezeigt.

Die Schnittstelle 60 weist eine kreisringförmige Auflagefläche 62 auf. Die kreisringförmige Auflagefläche 62 bildet den radial äußersten Teil der Schnittstelle 60. Sie dient als Gegenstück zu der kreisringförmigen Auflagefläche 32, 38.

Des Weiteren weist die Schnittstelle 60 eine konkave Wölbung 64 auf, die unmittelbar an die kreisringförmige Auflagefläche 62 angrenzt. Die konkave Wölbung 64 dient als Gegenstück zu der konvexen Wölbung 30 der am Implantatkörper 11 angeordneten Schnittstelle 24. Die konkave Wölbung 64 steht gegenüber der Auflagefläche 62 nach unten hin ab. Der äußere Rand der konkaven Wölbung 64 geht vorzugsweise tangential in die Auflagefläche 62 über.

Als Gegenstück zu dem Verdrehsicherungselement 13 fungiert eine an der Schnittstelle 60 vorgesehene tunnelartige Aussparung 66. Diese tunnelartige Aussparung 66 ist in die konkave Wölbung 64 eingebracht. Die konkave Wölbung 64 ist mit anderen Worten durch die tunnelartige Aussparung 66 unterbrochen. Die tunnelartige Aussparung 66 weist eine konkave Anlagefläche 68 sowie zwei planare Anlageflächen 70 auf. Die planaren Anlageflächen 70 grenzen jeweils an die konkave Anlagefläche 68 an. Die planaren Anlageflächen 70 liegen einander gegenüber und verlaufen vorzugsweise parallel zueinander.

Die Form der tunnelartigen Aussparung 66 ist an die Form des Kopfteils 52 des Verdrehsicherungselements 13 angepasst. In montiertem Zustand liegen die planaren Anlageflächen 56 des Verdrehsicherungselements 13 an den planaren Anlageflächen 70 der tunnelartigen Aussparung 66 an. Die konvexe Oberfläche 54 des Verdrehsicherungselements 13 liegt dagegen zumindest teilweise an der konkaven Anlagefläche 68 des tunnelartigen Aussparung 66 an. Letzteres ist nicht zwangsläufig notwendig. Die Kraftübertragung zwischen Verdrehsicherungselement 13 und Suprakonstruktion 20 kann auch nur über die planaren Anlageflächen 56 bzw. 70 erfolgen. Die axiale Kraftübertragung zwischen Suprakonstruktion 20 und Zahnimplantat 10 erfolgt über die kreisringförmigen Auflageflächen 38, 62. Die radiale Kraftübertragung zwischen Suprakonstruktion 20 und Zahnimplantat 10 erfolgt über den Kontakt der Wölbungen 30, 64.

Die Ausgestaltung der Schnittstellen 24 und 60 ermöglicht, wie bereits erwähnt, eine eindeutige Positionierung der Suprakonstruktion 20 gegenüber dem Zahnimplantat 10. Ferner ermöglicht sie eine stabile und dichte direkte Verbindung zwischen der Suprakonstruktion 20 und dem Zahnimplantat 10. Darüber hinaus sind die Schnittstellen 24, 60 vergleichsweist einfach, automatisiert und damit kostengünstig herstellbar. Die beschriebene Form der Schnittstellen 24, 60 genügt allen mechanischen Anforderungen an eine unmittelbare Verbindung von Titan (typischer Werkstoff, aus dem das Zahnimplantat 10 hergestellt ist) und Keramik (typischer Werkstoff, aus dem die Suprakonstruktion 20 hergestellt ist). Die beschriebene Form der Schnittstellen 24, 60 genügt im Übrigen auch den Anforderungen an eine unmittelbare Verbindung von Titan mit Titan, für einen Fall, in dem sowohl die Suprakonstruktion 20 als auch das Zahnimplantat 10 aus Titan hergestellt sind. Zudem eigenen sich die Schnittstellen 24, 60 für den eingangs genannten Herstellungsprozess, bei dem die Suprakonstruktion 20 anhand eines CAD-Modells automatisiert gefertigt ist (bspw. durch spanabhebende oder additive Fertigungsverfahren).

Die separate Ausgestaltung des Verdrehsicherungselements 13 als eigenes Bauteil, welches in dem Implantatkörper 11 anordenbar ist und nicht mit diesem integral verbunden ist, vereinfacht die Herstellung der am im Implantatkörper 11 angeordneten Schnittstelle 24 zudem. Der Implantatkörper 11 und das Verdrehsicherungselement 13 lassen sich relativ kostengünstig als separate Bauteile produzieren und erst nachträglich miteinander verbinden.

## Patentansprüche

1. Zahnimplantat (10), mit einem Implantatkörper (11), der auf einer Außenseite ein Außengewinde (12) zur Befestigung des Zahnimplantats (10) an einem Kieferknochen aufweist und eine sich entlang einer Längsachse (14) des Zahnimplantats (10) erstreckende Öffnung (16) hat, in der ein Innengewinde (18) zur Befestigung einer Suprakonstruktion (20) an dem Zahnimplantat (10) angeordnet ist, wobei der Implantatkörper (11) ferner eine Schnittstelle (24) zur Befestigung der Suprakonstruktion (20) an dem Zahnimplantat (10) aufweist, die an einem stirnseitigen Ende des Implantatkörpers (11) angeordnet ist und eine Ausnehmung (40) aufweist, in der ein Verdrehsicherungselement (13) angeordnet ist, das dazu eingerichtet ist, eine Verdrehung der Suprakonstruktion (20) um die Längsachse (14) relativ zu dem Zahnimplantat (10) zu verhindern, wobei das Verdrehsicherungselement (13) als ein von dem Implantatkörper (11) separates Bauteil ausgestaltet ist, das im Bereich der Schnittstelle (24) an dem Implantatkörper (11) befestigt ist,
**dadurch gekennzeichnet, dass** die Schnittstelle (24) eine sich über einen Winkelbereich von mindestens 90° um die Längsachse (14) herum erstreckende konvexe, abgerundete Wölbung (30) aufweist, die durch die Ausnehmung (40) zumindest teilweise unterbrochen ist.

2. Zahnimplantat nach Anspruch 1, wobei das Verdrehsicherungselement (13) form- oder stoffschlüssig mit dem Implantatkörper (11) verbunden ist.

3. Zahnimplantat nach Anspruch 1 oder 2, wobei das Verdrehsicherungselement (13) in den Implantatkörper (11) eingepresst oder in dem Implantatkörper (11) verklemmt ist.

4. Zahnimplantat nach Anspruch 1, wobei die Schnittstelle (24) abgesehen von der Ausnehmung (40) drehsymmetrisch ist, und wobei die Schnittstelle (24) spiegelsymmetrisch zu einer Längsschnittebene (26) ist, in der die Längsachse (14) liegt (14) und die das Verdrehsicherungselement (13) in zwei gleich große Hälften teilt.

5. Zahnimplantat nach Anspruch 4, wobei das Verdrehsicherungselement (13) radial nach innen über die Wölbung (30) hinaus absteht.

6. Zahnimplantat nach einem der Ansprüche 1-5, wobei das Verdrehsicherungselement (13) einen Zapfen (50), der in eine im Implantatkörper (11) angeordnete Bohrung (48) eingesteckt ist, und ein Kopfteil (52), das außerhalb der Bohrung (48) angeordnet ist, aufweist.

7. Zahnimplantat nach Anspruch 6, wobei der Zapfen (50) einen Außendurchmesser aufweist, der größer als ein Innendurchmesser der Bohrung (48) ist, wobei das Kopfteil (52) an seiner Oberseite eine konvexe Oberfläche (54) hat, und wobei die Bohrung (48) parallel versetzt zu der Längsachse (14) ist.

8. Zahnimplantat nach einem der Ansprüche 1-7, wobei die Schnittstelle (24) eine im Vergleich zu der konvexen Wölbung (30) radial weiter außen angeordnete Auflagefläche (32) aufweist, wobei die Auflagefläche (32) zumindest einen kreisringförmigen Abschnitt (38) hat, der quer zu der Längsachse (14) ausgerichtet ist.

9. Zahnprothese (100), aufweisend:
- ein Zahnimplantat (10) gemäß einem der Ansprüche 1-8;
- eine Suprakonstruktion (20); und
- ein Befestigungsmittel (62) zur Befestigung der Suprakonstruktion (20) an dem Zahnimplantat (10).

10. Suprakonstruktion (20), aufweisend:
- ein sich entlang einer Längsachse (74) der Suprakonstruktion (20) erstreckende Öffnung (72); und
- eine an einem stirnseitigen Ende der Suprakonstruktion (20) angeordnete Schnittstelle (60) zur Befestigung der Suprakonstruktion (20) an einem Zahnimplantat (10);
wobei die Schnittstelle (60) eine sich über einen Winkelbereich von mindestens 90° um die Längsachse herum erstreckende konkave Wölbung (64) aufweist, **dadurch gekennzeichnet, dass** die konkave Wölbung (64) durch eine tunnelartige Aussparung (66) unterbrochen ist, die in radialer Richtung orthogonal zu der Längsachse (74) verläuft und als Gegenstück zu einem Verdrehsicherungselement (13) des Zahnimplantats (10) fungiert.

11. Suprakonstruktion nach Anspruch 10, wobei die Schnittstelle (60) eine im Vergleich zu der konkaven Wölbung (64) radial weiter außen angeordnete Auflagefläche (62) aufweist, wobei die Auflagefläche (62) zumindest einen kreisringförmigen Abschnitt hat, der quer zu der Längsachse (74) ausgerichtet ist.

12. Suprakonstruktion nach Anspruch 11, wobei ein radial äußerer Rand der konkaven Wölbung (64) tangential in den kreisringförmigen Abschnitt der Auflagefläche (62) übergeht.

13. Zahnprothese (100), aufweisend:
- ein Zahnimplantat (10);
- eine Suprakonstruktion (20) gemäß einem der Ansprüche 10-12; und
- ein Befestigungsmittel (62) zur Befestigung der Suprakonstruktion (20) an dem Zahnimplantat (10).

## Claims

1. A dental implant (10), comprising an implant body (11) having on an outer side an external thread (12) for fastening the dental implant (10) to a jaw bone and having an opening (16) extending along a longitudinal axis (14) of the dental implant (10), in which opening an internal thread (18) for fastening a superstructure (20) to the dental implant (10) is arranged, wherein the implant body (11) further comprises an interface (24) for fastening the superstructure (20) to the dental implant (10), which interface (24) is arranged at a front end of the implant body (11) and comprises a recess (40) in which an anti-rotation element (13) is arranged, which is configured to prevent a rotation of the superstructure (20) around the longitudinal axis (14) relative to the dental implant (10), wherein the anti-rotation element (13) is configured as a component separate from the implant body (11) which is attached to the implant body (11) in an area of the interface (24),
**characterized in that** the interface (24) comprises a convex, rounded curvature (30) that extends over an angular range of at least 90° around the longitudinal axis (14) and that is at least partially interrupted by the recess (40)

2. The dental implant according to claim 1, wherein the anti-rotation element (13) is connected to the implant body (11) in a positive-locking or firmly bonded manner.

3. The dental implant according to claim 1 or 2, wherein the anti-rotation element (13) is pressed into the implant body (11) or clamped in the implant body (11).

4. The dental implant according to claim 1, wherein the interface (24) is, apart from the recess (40), rotationally symmetrical, and wherein the interface (24) is mirror symmetrical with respect to a longitudinal sectional plane (26) in which the longitudinal axis (14) lies and which divides the anti-rotation element (13) into two halves of equal size.

5. The dental implant according to claim 4, wherein the anti-rotation element (13) protrudes radially inward beyond the curvature (30).

6. The dental implant according to any one of claims 1-5, wherein the anti-rotation element (13) comprises a pin (50) inserted into a bore (48) arranged in the implant body (11) and a head portion (52) arranged outside the bore (48).

7. The dental implant of claim 6, wherein the pin (50) has an outer diameter that is larger than an inner diameter of the bore (48), wherein the head portion (52) has a convex surface (54) on its upper side, and wherein the bore (48) is in parallel offset to the longitudinal axis (14).

8. The dental implant of any one of claims 1-7, wherein the interface (24) comprises a support surface (32) arranged radially outwardly relative to the convex curvature (30), wherein the support surface (32) has at least one annular portion (38) oriented transversely to the longitudinal axis (14).

9. A dental prosthesis (100), comprising:
- a dental implant (10) according to any one of claims 1-8;
- a superstructure (20); and
- a fastening element (22) for fastening the superstructure (20) to the dental implant (10).

10. A superstructure (20), comprising:
- an opening (72) extending along a longitudinal axis (74) of the superstructure (20); and
- an interface (60) arranged at a front end of the superstructure (20) for fastening the superstructure (20) to a dental implant (10);
wherein the interface (60) comprises a concave curvature (64) that extends over an angular range of at least 90° around the longitudinal axis,
**characterized in that** the concave curvature (64) is interrupted by a tunnel-like recess (66) that extends in a radial direction orthogonal to the longitudinal axis (74) and acts as a counterpart to an anti-rotation element (13) of the dental implant (10).

11. The superstructure of claim 10, wherein the interface (60) comprises a support surface (62) arranged radially outwardly relative to the concave curvature (64), wherein the support surface (62) has at least one annular portion oriented transversely to the longitudinal axis (74).

12. The superstructure of claim 11, wherein a radially outer edge of the concave curvature (64) transitions tangentially into the annular portion of the support surface (62).

13. A dental prosthesis (100), comprising:
- a dental implant (10);
- a superstructure (20) according to any one of claims 10-12; and
- a fastening element (22) for fastening the superstructure (20) to the dental implant (10).

## Revendications

1. Implant dentaire (10), comprenant un corps d'implant (11) qui présente, sur un côté extérieur, un filetage extérieur (12) servant à la fixation de l'implant dentaire (10) sur un os maxillaire et a une ouverture (16) s'étendant le long d'un axe longitudinal (14) de l'implant dentaire (10), dans laquelle un filetage intérieur (18) servant à la fixation d'une superstructure (20) sur l'implant dentaire (10) est disposé, le corps d'implant (11) présentant en outre une interface (24) servant à la fixation de la superstructure (20) sur l'implant dentaire (10), laquelle interface est disposée à une extrémité frontale du corps d'implant (11) et présente une cavité (40) dans laquelle un élément de fixation anti-rotation (13) est disposé, lequel est conçu pour empêcher une rotation de la superstructure (20) autour de l'axe longitudinal (14) par rapport à l'implant dentaire (10), l'élément de fixation anti-rotation (13) étant réalisé sous la forme d'un composant séparé du corps d'implant (11), lequel composant est fixé sur le corps d'implant (11) dans la région de l'interface (24), **caractérisé en ce que** l'interface (24) présente un bombement (30) arrondi convexe s'étendant sur une plage angulaire d'au moins 90° autour de l'axe longitudinal (14), lequel bombement est interrompu au moins partiellement par la cavité (40).

2. Implant dentaire selon la revendication 1, l'élément de fixation anti-rotation (13) étant relié par engagement par complémentarité de formes ou par liaison de matière au corps d'implant (11).

3. Implant dentaire selon la revendication 1 ou 2, l'élément de fixation anti-rotation (13) étant forcé dans le corps d'implant (11) ou serré dans le corps d'implant (11).

4. Implant dentaire selon la revendication 1, l'interface (24), mise à part la cavité (40), présentant une symétrie de révolution, et l'interface (24) présentant une symétrie spéculaire par rapport à un plan de coupe longitudinal (26) dans lequel l'axe longitudinal (14) se situe (14) et qui divise l'élément de fixation anti-rotation (13) en deux moitiés de même taille.

5. Implant dentaire selon la revendication 4, l'élément de fixation anti-rotation (13) faisant saillie radialement vers l'intérieur au-delà du bombement (30).

6. Implant dentaire selon l'une des revendications 1 à 5, l'élément de fixation anti-rotation (13) présentant une goupille (50) qui est insérée dans un alésage (48) disposé dans le corps d'implant (11) et une partie tête (52) qui est disposée à l'extérieur de l'alésage (48).

7. Implant dentaire selon la revendication 6, la goupille (50) présentant un diamètre extérieur qui est supérieur à un diamètre intérieur de l'alésage (48), la partie tête (52) ayant, sur son côté supérieur, une surface convexe (54), et l'alésage (48) étant décalé parallèlement par rapport à l'axe longitudinal (14).

8. Implant dentaire selon l'une des revendications 1 à 7, l'interface (24) présentant une surface d'appui (32) disposée radialement plus à l'extérieur que le bombement convexe (30), la surface d'appui (32) ayant au moins un segment (38) de forme annulaire circulaire qui est orienté transversalement à l'axe longitudinal (14).

9. Prothèse dentaire (100), comprenant :
- un implant dentaire (10) selon l'une des revendications 1 à 8 ;
- une superstructure (20); et
- un moyen de fixation (62) servant à la fixation de la superstructure (20) sur l'implant dentaire (10).

10. Superstructure (20), comprenant :
- une ouverture (72) s'étendant le long d'un axe longitudinal (74) de la superstructure (20) ; et
- une interface (60) disposée à une extrémité frontale de la superstructure (20) et servant à la fixation de la superstructure (20) sur un implant dentaire (10) ;
l'interface (60) présentant un bombement concave (64) s'étendant sur une plage angulaire d'au moins 90° autour de l'axe longitudinal,
**caractérisée en ce que** le bombement concave (64) est interrompu par un évidement (66) de type tunnel qui s'étend dans la direction radiale de manière orthogonale à l'axe longitudinal (74) et fonctionne comme pièce complémentaire d'un élément de fixation anti-rotation (13) de l'implant dentaire (10).

11. Superstructure selon la revendication 10, l'interface (60) présentant une surface d'appui (62) disposée radialement plus à l'extérieur que le bombement concave (64), la surface d'appui (62) ayant au moins un segment de forme annulaire circulaire qui est orienté transversalement à l'axe longitudinal (74).

12. Superstructure selon la revendication 11, un bord radialement extérieur du bombement concave (64) se prolongeant tangentiellement dans la section de forme annulaire circulaire de la surface d'appui (62).

13. Prothèse dentaire (100), comprenant :
- un implant dentaire (10) ;
- une superstructure (20) selon l'une des revendications 10 à 12 ; et
- un moyen de fixation (62) servant à la fixation de la superstructure (20) sur l'implant dentaire (10).
